# EUROPEAN PATENT SPECIFICATION

(11) **EP 0 992 463 B1**
(45) Date of publication and mention of the grant of the patent: **27.06.2007**
(21) Application number: 99910786.5
(22) Date of filing: 30.03.1999
(51) Int. Cl.: C03C 4/12, C09K 11/00, C03C 3/062, C03C 3/064, C03C 3/066, C03C 3/068, C03C 3/076, C03C 3/078, C03C 3/083, C03C 3/085, C03C 3/14, C03C 3/095, C03C 3/12, C09K 11/08

(54) **OXIDE GLASS SHOWING LONG AFTERGLOW AND ACCELERATED PHOSPHORESCENCE**
OXYDGLAS MIT LANGANHALTEDEM NACHLEUCHTEN UND BESCHLEUNIGTER PHOSPHORESZENZ
VERRE A BASE D'OXYDES AYANT UNE LONGUE POSTLUMINESCENCE ET UNE PHOSPHORESCENCE ACCELEREE

(30) Priority: 01.04.1998 JP 8867498; 25.06.1998 JP 17862498; 26.03.1999 JP 8286699
(43) Date of publication of application: 12.04.2000
(60) Divisional application: 06010336.3
(73) Proprietor: SUMITA OPTICAL GLASS, INC., Urawa-shi, Saitama 338-8565 (JP)
(72) Inventor: YAMAZAKI, Masaaki, Sumita Optical Glass, Inc., Urawa-shi, Saitama 338-8565 (JP); YAMAMOTO, Yoshinori, Sumita Optical Glass, Inc., Urawa-shi, Saitama 338-8565 (JP); SAWANOBORI, Naruhito, Sumita Optical Glass, Inc., Urawa-shi, Saitama 338-8565 (JP); NAGAHAMA, Shinobu, Sumita Optical Glass, Inc., Urawa-shi, Saitama 338-8565 (JP)
(74) Representative: Setna, Rohan P.
(86) International application number: PCT/JP1999/001642
(87) International publication number: WO 1999/050198

(56) References cited:
- EP-A- 0 265 983
- EP-A- 0 338 934
- EP-A- 0 926 102
- JP-A- 61 242 925
- US-A- 4 999 321
- QIU J ET AL: "FEMTOSECOND LASER-INDUCED THREE-DIMENSIONAL BRIGHT AND LONG-LASTINGPHOSPHORESCENCE INSIDE CALCIUM ALUMINOSILICATE GLASSES DOPED WITH RARE EARTH IONS" APPLIED PHYSICS LETTERS, AMERICAN INSTITUTE OF PHYSICS. NEW YORK, US, vol. 73, no. 13, 28 September 1998 (1998-09-28), pages 1763-1765, XP000784151 ISSN: 0003-6951
- JOURNAL OF PHYSICS: CONDENSED MATTER, Volume 10, Number 42, issued 26 October 1998, H. HOSONO et al., "Long Lasting Phosphorescence Properties of Tb3+-Activated Reduced Calcium Aluminate Glasses", p. 9541-9547, XP002921250
- JOURNAL OF NON-CRYSTALLINE SOLIDS, Volume 241, Number 1, issued 1 November 1998, M. YAMAZAKI et al., "Long Luminescent Glass: Tb3+-Activated ZnO-B2O-SiO2 Glass", p. 71-73, XP002921251

## Description

### Technical Field

This invention relates to an oxide glass capable of exhibiting a long lasting afterglow and photostimulated luminescence, whereby energy can be accumulated by radiation excitation, for example, by γ-rays, X-rays, UV-rays, etc., light emission can be continued for a long time even after stopping the excitation, so that the oxide glass can be used as a phosphorescent material for night illumination or night signals, and furthermore, photostimulated luminescence can be exhibited by irradiation of visible rays or infrared rays, which is useful for confirming an infrared laser or controlling an optical axis of a laser beam, so that recording or reproducing of γ-rays, X-rays or UV-rays images can be effected, and which can be used as an optical recording material capable of reading and writing.

### Background Technique

Phosphorescent materials or photostimulated luminescence phosphors using rare earth elements have been used widely up to the present time. As a phosphorescent material, there can practically be used SrAl₂O₄:Eu²⁻, Dy³⁻, etc. and as a photostimulated luminescence phosphor, there has already been developed BaFBr: Eu²⁻, etc. These are opaque materials only exhibiting superficial phosphorescence, generally obtained by coating a suitable carrier with a powdered phosphorescent material or photostimulated luminescence phosphor.

On the other hand, a glass capable of exhibiting a photostimulated luminescence without coating a photostimulated luminescence phosphor has been disclosed in JP-A-9-221336. In addition, Japanese Patent Application Nos. 346362/1997, 13033/1998 and 187341/1998 respectively disclose obtaining phosphorescent glasses of the SiO₂-B₂O₃-ZnO-Tb₂O₃ system, GeO₂-ZnO-Na₂O-Tb₂O₃ system and SiO₂-ZnO-Ga₂O₃-Tb₂O₃ system.

When coating a powdered phosphorescent material or photostimulated luminescent phosphor, dispersion of the coating thickness or peeling-off of the coated surface occurs so as to cause light and shade of the phosphorescence. Furthermore, in order to increase the emission intensity, it is necessary to coat a phosphorescent material or photostimulated luminescence phosphor with a larger thickness, but the coating is limited by increase of opaqueness thereof. Since phosphorescence emitted from a grain boundary in the phosphorescent material or photostimulated luminescence phosphor is scattered, furthermore, no clear image can be obtained.

A photostimulated luminescent glass described in JP-A-9-221336 utilizes C³⁺ or Eu²⁺ as an active ion for emission. In order to obtain these active ions, it is necessary to add a reducing agent or to melt in a reducing atmosphere. Furthermore, observation of the emission is difficult because it is UV light or blue light.

Qiu et al, Applied Physics Letters, Volume 73, Number 13, 28 September 1998, describe femtosecond laser-induced three-dimensional bright and long-lasting phosphorescence inside calcium aluminosilicate glasses doped with rare earth ions. Yamazaki et al, Journal of Non-Crystalline Solids, 241 (1998), pages 71-73, describe long luminescent glass: Tb³⁺-activiated znO-B₂O-SiO₂ glass. Hosono et al, Journal of Physics: Condensed Matter, 10 (1998), pages 9541-9547 describe long lasting phosphorescence properties of Tb³⁺-activated reduced calcium aluminate glasses.

The present invention has been made to solve the problems of the prior art, as described above, and aims at providing an oxide glass capable of exhibiting a long lasting afterglow and photostimulated luminescence of green or red emitted light readily observable, which can be melted without using any reducing agent or reducing atmosphere by utilizing Tb or Mn as a phosphorescent or luminescent agent.

Accordingly, the present invention provides an oxide glass capable of exhibiting photostimulated luminescence by excitation by radiation, characterised in that it is capable of exhibiting a long lasting afterglow and has a constitutional composition comprising, at least, terbium oxide (Tb₂O₃), gallium oxide (Ga₂O₃) or aluminium oxide (Al₂O₃), alkaline earth metal oxide and zinc oxide (ZnO), and which is represented, in terms of atoms making up the glass, by the following chemical composition (mol%):

| | | |
|---|---|---|
| Ga₂O₃ | 0 to 55% | |
| Al₂O₃ | 0 to 30% | (Ga₂O₃ + Al₂O₃ = 15 to 55%) |
| R'O | 20 to 70% | (R': at least one atom selected from Mg, Ca, Sr and Ba) |
| ZnO | 2 to 40% | |
| Tb₂O₃ | 0.01 to 5% | |
| R₂O | 0 to 25% | (R: at least one atom selected from Li, Na, K and Cs) |
| SiO₂ | 0 to 15% | |
| GeO₂ | 0 to 25% | |
| B₂O₃ | 0 to 25% | |
| Yb₂O₃ | 0 to 3% | |
| ZrO₂ | 0 to 5% | |
| Ln₂O3 | 0 to 5% | (Ln: at least one atom selected from Y, La, Gd, Lu, Sm, Dy, Tm and Pr) and |
| Sb₂O₃ | 0 to 1% | |

Preferably, the oxide glass is represented, in terms of atoms making up the glass, by the following chemical composition (mol%):

| | | |
|---|---|---|
| Ga₂O₃ | 0 to 50% | |
| Al₂O₃ | 0 to 25% | (Ga₂O₃ + Al₂O₃ = 18 to 50%) |
| R'O | 24 to 65% | (R': at least one atom selected from Mg, Ca, Sr and Ba) |
| ZnO | 4 to 35% | |
| Tb₂O₃ | 0.1 to 3% | |
| R₂O | 0 to 20% | (R: at least on atom selected from Li, Na, K and Cs) |
| SiO₂ | 0 to 10% | |
| GeO₂ | 0 to 20% | |
| B₂O₃ | 0 to 20% | |
| Yb₂O₃ | 0 to 2% | |
| ZrO₂ | 0 to 3.5% | |
| Ln₂O₃ | 0 to 3% | (Ln: at least one atom selected from Y, La, Gd, Lu, Sm, Dy, Tm and Pr) and |
| Sb₂O₃ | 0 to 0.5% | |

According to the above described composition energy can be accumulated by radiation excitation, for example, by γ-rays, X-rays, UV-rays, etc., light emission can be continued for a long time even after stopping the excitation, and furthermore, photostimulated luminescence can be exhibited by irradiation by visible rays or infrared rays.

### Brief Description of the Drawings

Fig. 1 is a graph showing a phosphorescent spectrum of the glass prepared in Example 1, excited by an UV-ray of 254 nm.
Fig. 2 is a graph, curves (a), (b) and (c) showing a change of emission intensity with time as to the glasses prepared, respectively in Examples 1, 14 and Comparative Example, excited by an UV-ray of 254 nm.
Fig. 3 is a graph showing a phosphorescent spectrum of the glass prepared in Example 30, excited by an UV-ray of 254 nm.
Fig. 4 is a graph showing a change of emission intensity with time of the glass prepared in Example 30, excited by an UV-ray of 254 nm.
Fig. 5 is a graph showing a phosphorescent spectrum of the glass prepared in Example 36, excited by an UV-ray of 330 nm.
Fig. 6 is a graph, Curves (a) and (b) showing a change of emission intensity with time of the glasses prepared, respectively in Example 36 and Comparative Example 2, excited by an UV-ray of 330 nm.

### Best Embodiments for carrying out Present Invention

Generally, rare earth ions in an excited state tend to emit light in about one second to lose their energy. Thus, it is considered in an oxide glass containing a large amount of zinc, for example glass of the SiO₂-B₂O₃-ZnO-Tb₂O₃ type as previously proposed in Japanese Patent Application No. 34632/1997 that energy is accumulated in the trapping level of zinc ion by high energy radiation such as γ-rays, X-rays or UV-rays and the inventors have learned that the energy in the trapping level is released by a stimulus such as heat, visible rays or infrared rays and removed to a terbium ion so as to exhibit a long lasting afterglow and photostimulated luminescence.

In the glass system of the present invention, it is also considered that a similar emission mechanism acts. That is, it seems that energy remains in defects of a glass formed by irradiation by high energy radiation such as UV-rays and the energy is gradually released by a stimulus such as heat or light so that the rare earth elements emit light.

In the glass system of the present invention, since energy can be stored with a lower energy, longer wavelength light by rendering less the content of SiO₂ than a SiO₂-Ga₂O₃-Na₂O-Tb₂O₃ sytsem, a long lasting afterglow can be obtained by an ordinary fluorescent lamp or sunlight without using a special exciting light source.

In the present invention, SiO₂ is a component for assisting glass-formation, but if the content exceeds 15 %, a higher energy, short wavelength light is required which reduces the efficiency. The preferred range is at most 10%.

In the present invention, B₂O₃ is a component for rendering glass formation easy, but if the content exceeds 25 %, a higher energy, short wavelength light is required which reduces the efficiency. The preferred range is at most 20%.

In the present invention, Tb₂O₃ is a component for presenting green phosphorescence. If more than 5 %, it is difficult to obtain the glass, and if less than 0.01 %, the emission intensity is not sufficient. The preferred range is 0.1 to 3 %.

In the present invention, Ga₂O₃ is a component for forming the glass and improving the lasting afterglow effect of the glass. If more than 55 %, the glass is unstable and tends to be crystallized. The preferred range is 0 to 50 %.

Al₂O₃ is a component for forming the glass and improving the durability of the glass. If exceeding 30 %, the melting temperature of the glass is increased too much to prepare the glass. The preferred range is 0 to 25 %.

If the sum of Ga₂O₃ and Al₂O₃ is less than 15 %, it is difficult to form the glass and the emission intensity of the glass is reduced, while if exceeding 55 %, the melting temperature of the glass is increased too much to prepare the glass. The preferred range is 18 to 50 %

In the present invention, R'O (R': at least one atom selected from Mg, Ca, Sr and Ba) is a component for assisting formation of the glass, when used together with Ga₂O₃ or Al₂O₃. If more than 70 %, the glass is unstable and tends to be crystallized, while if less than 20 %, the melting temperature of the glass is increased too much to prepare the glass. The preferred range is 24 to 65 %.

R₂O (R: at least one atom selected from Li, Na, K and Cs) acts to lower the melting temperature of the glass melt, but if exceeding 25 %, the water resistance is lowered and the devitrification tendency is increased, thus rendering the glass unstable. The preferred range is 0 to 20 %.

In the present invention, ZnO is similarly a component for accumulating energy, improving the melting property of the glass and rendering glass formation easy. If less than 2 %, there arises a problem that the effect of accumulating energy is reduced and the lasting afterglow intensity is reduced, while if more than 40 %, glass formation is difficult. The preferred range is 4 to 35 %.

In the present invention, GeO₂ is a component for rendering glass formation easy, but if more than 25 %, high energy short wavelength light is necessary for accumulating energy which deteriorates the property. The preferred range is at most 20%.

In the present invention, ZrO₂ is a component for improving the durability of the glass, but if more than 5 %, the glass is unstable and tends to be crystallized. The preferred range is 0 to 3.5 %.

In the present invention, Ln₂O₃ (Ln: at least one atom selected from Y, La, Gd, Lu, Sm, Dy, Tm and Pr) is also a component for increasing the viscosity of the glass and suppressing crystallization, but if more than 5 %, the above described effect is reduced. The preferred range is 0 to 3 %.

In the present invention, Sb₂O₃ is a cleaning agent and if exceeding 1 %, the afterglow intensity is reduced. The preferred range is 0 to 0.5 %.

Cleaning agents such as As₂O₅ and the commonly used auxiliary components, for example, P₂O₅, WO₃, TeO₂, Bi₂O₃, Nb₂O₅, Ta₂O₅, TiO₃, CdO, SnO, PbO, Tl₂O, CoO,F, Cl and Br can optionally be added, in such an amount that the effects of the present invention are not reduced to the glass composition.

Production of an oxide phosphorescent glass capable of visually exhibiting a long lasting afterglow and photostimulated luminescence is carried out by mixing the corresponding raw material compounds to a proportion of the object composition, for example, silica, boric anhydride, gallium oxide, calcium oxide, aluminum oxide, zinc oxide, terbium oxide, manganese oxide, etc., melting the resulting mixture at a temperature of 1100 to 1500°C for 1 to 3 hours and allowing the mixture to flow out into a metallic mold, followed by shaping.

Preferred embodiments of the present invention are summarized below:
(I) Oxide glasses each capable of exhibiting a long lasting afterglow and photostimulated luminescence, as descibed in the foregoing, which is represented, in term of atoms making up the glass, by chemical compositions (mol %) shown in Tables 1 to 3:

**Table 1**

| | |
|---|---|
| SiO₂ | 0 to 60 |
| B₂O⁻₃ | 0 to 50 |
| SiO₂ + B₂O₃ | 10 to 70 |
| Tb₂O₃ | 0.05 to 8 |
| Ga₂O₃ | 0 to 55 |
| Al₂O₃ | 0 to 40 |
| Ga₂O₃ + Al₂O₃ | 5 to 55 |
| R₂O ① | 0 to 60 |
| R'O ② | 0 to 60 |
| R₂O + R'O | 10 to 60 |
| ZnO | 0 to 25 |
| Yb₂O₃ | 0 to 7 |
| GeO₂ | 0 to 15 |
| ZrO₂ | 0 to 3.5 |
| Ln₂O₃ ③ | 0 to 5 |
| Sb₂O₃ | 0 to 0.5 |

| | |
|---|---|
| (Note) ① R: at least one atom selected from Li,-Na, K and Cs ② R':at least one atom selected from Mg, Ca, Sr and Ba ③ Ln: at least one atom selected from Y, La, Gd, Lu, Sm, Dy and Tm | |

**Table 2**

| | |
|---|---|
| SiO₂ | 0 to 60 |
| B₂O₃ | 0 to 50 |
| SiO₂ + B₂O₃ | 10 to 70 |
| Tb₂O₃ | 0 to 8 |
| MnO | 0 to 1 |
| Tb₂O₃ + MnO | 0.05 to 8 |
| Ga₂O₃ | 0 to 55 |
| Al₂O₃ | 0 to 40 |
| Ga₂O₃ + Al₂O₃ | 5 to 55 |
| R₂O ① | 0 to 60 |
| R'O ② | 0 to 60 |
| R₂O + R'O | 10 to 60 |
| ZnO | 0 to 25 |
| Yb₂O₃ | 0 to 7 |
| GeO₂ | 0 to 15 |
| ZrO₂ | 0 to 3.5 |
| Ln₂O₃ ③ | 0 to 5 |
| Sb₂O₃ | 0 to 0.5 |

| | |
|---|---|
| (Note) ① R: at least one atom selected from Li, Na, K and Cs ② R':at least one atom selected from Mg, Ca, Sr and Ba ③ Ln: at least one atom selected from Y, La, Gd, Lu, Sm, Dy and Tm | |

**Table 3**

| | |
|---|---|
| Ga₂O₃ | 0 to 50 |
| Al₂O₃ | 0 to 25 |
| Ga₂O₃ + Al₂O₃ | 18 to 50 |
| R'O ① | 24 to 65 |
| ZnO | 4 to 35 |
| Tb₂O₃ | 0.1 to 3 |
| R₂O ② | 0 to 20 |
| SiO₂ | 0 to 10 |
| GeO₂ | 0 to 20 |
| B₂O₃ | 0 to 20 |
| Yb₂O₃ | 0 to 2 |
| ZrO₂ | 0 to 3.5 |
| Ln₂O₃ ③ | 0 to 3 |
| Sb₂O₃ | 0 to 0.5 |

| | |
|---|---|
| ① R': at least one atom selected from Mg, Ca, Sr and Ba ② R: at least one atom selected from Li, Na, K and Cs ③ Ln: at least one atom selected from Y, La, Gd, Lu, Sm, Dy, Tm and Pr | |

The present invention will now be illustrated in detail without limiting the same:

### Example 1 (not in accordance with the present invention)

Raw materials were mixed according to the weight ratios of Example No. 1 shown in Table 5 to give the composition of Example No. 1 shown in Table 4. The thus prepared raw materials were melted at a temperature of 1100 to 1500 °C for 1 to 3 hours, allowed to flow into a metallic mold and shaped to obtain a glass.

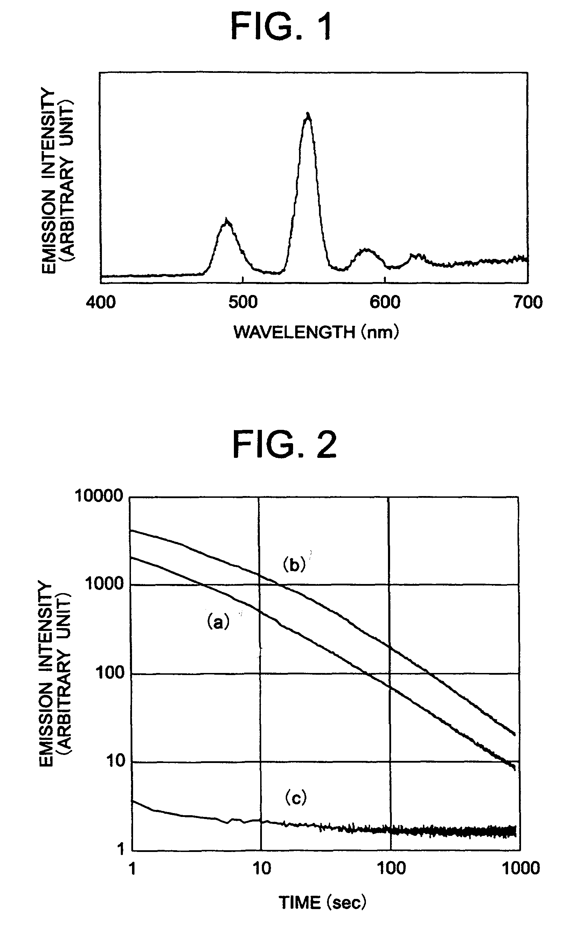

When the resulting glass was excited by an ultraviolet ray of 254 nm, green afterglow phosphorescence was exhibited giving the phosphorescent spectrum shown in Fig. 1. The change of emission intensity with time of the glass excited by the UV ray of 254 nm is shown in Fig. 2 (a). When this glass was irradiated by X-rays and then by a semiconductor laser of 800 nm, a green photostimulated luminescence was visually observed.

### Examples 2 to 29 (not in accordance with the present invention)

Raw materials were mixed according to corresponding weight ratios and melted in a similar manner to Example 1 to obtain various glass compositions.

When the resulting glasses in Examples 2 to 29 were excited by an ultraviolet ray of 254 nm, there were obtained similar spectra to Fig. 1 exhibiting afterglow phosphorescence similar to Example 1 and change of emission intensity of thereof with time, similar to Fig. 2. The change in the case of Example 14 is also shown in Fig. 2 (b). When these glasses were irradiated by X-rays in a similar manner to Example and then by a semiconductor laser of 800 nm, a green photostimulated luminescence was visually observed.

### Comparative Example 1

A glass having a composition shown in Comparative Example 1 of Table 5 was prepared using raw materials shown in Comparative Example 1 of Table 4 in a similar manner to Example 1. The resulting glass was excited by an ultraviolet ray of 254 nm under similar conditions to Example 1, and the afterglow intensity was measured. The result is shown in Fig. 2 (c).

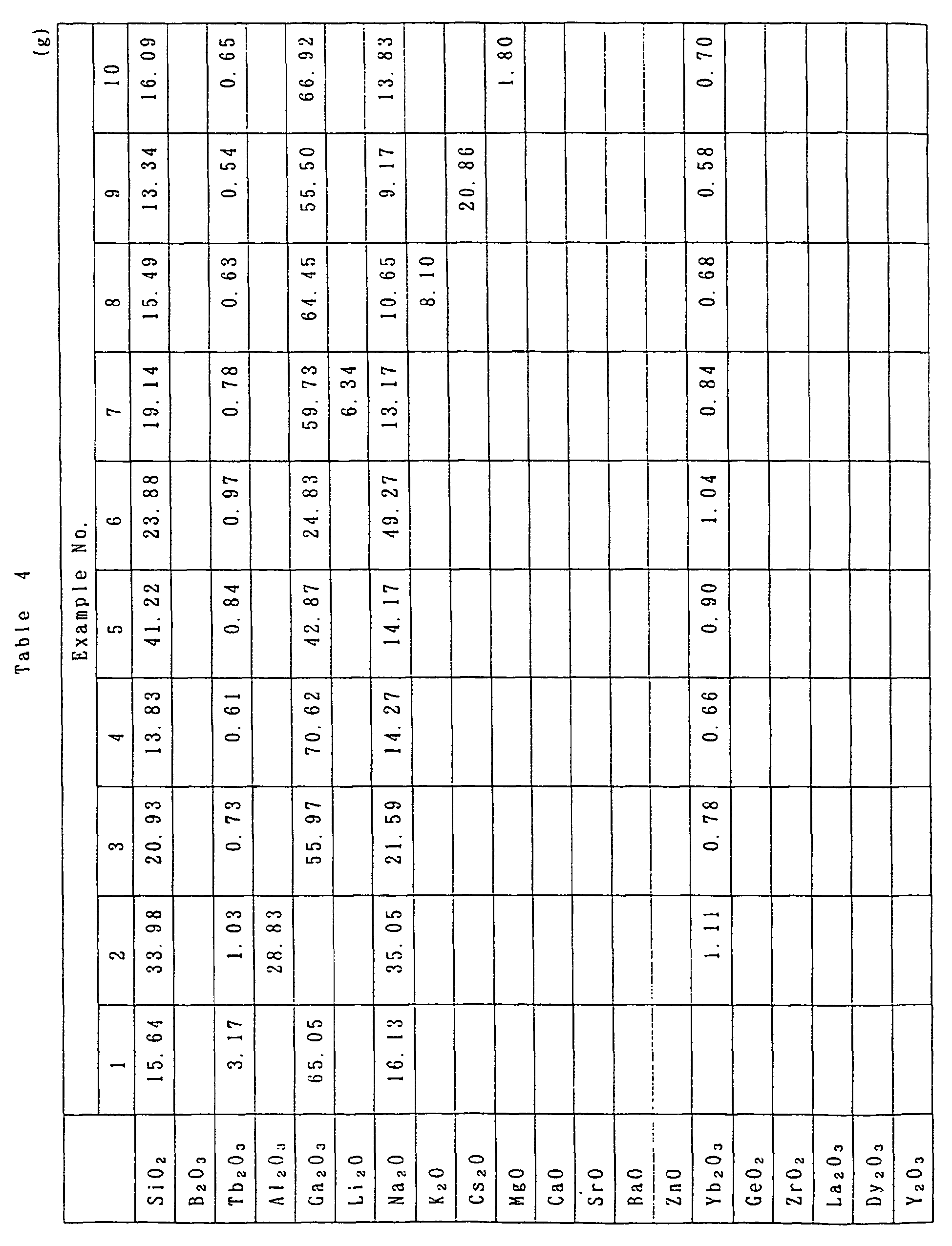

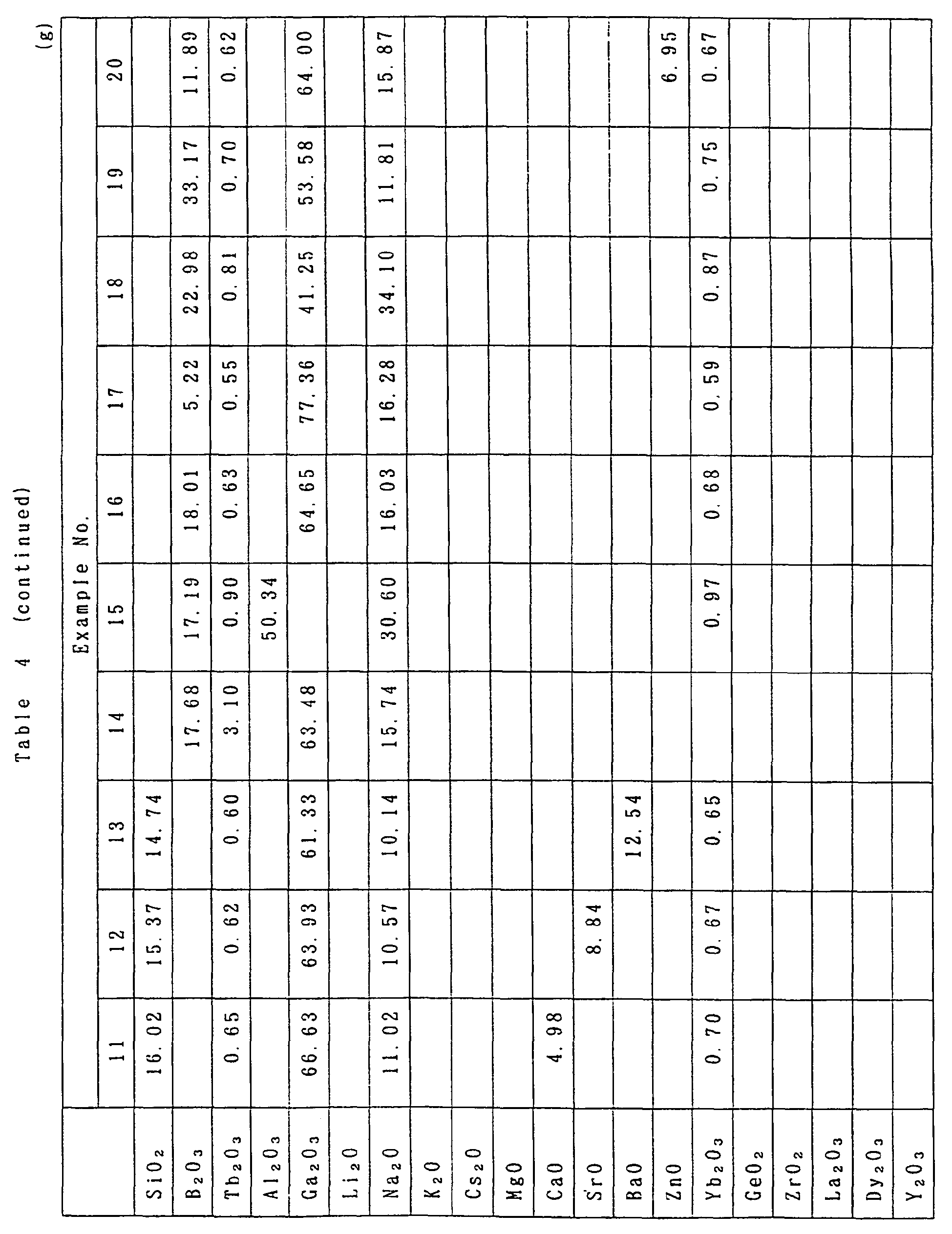

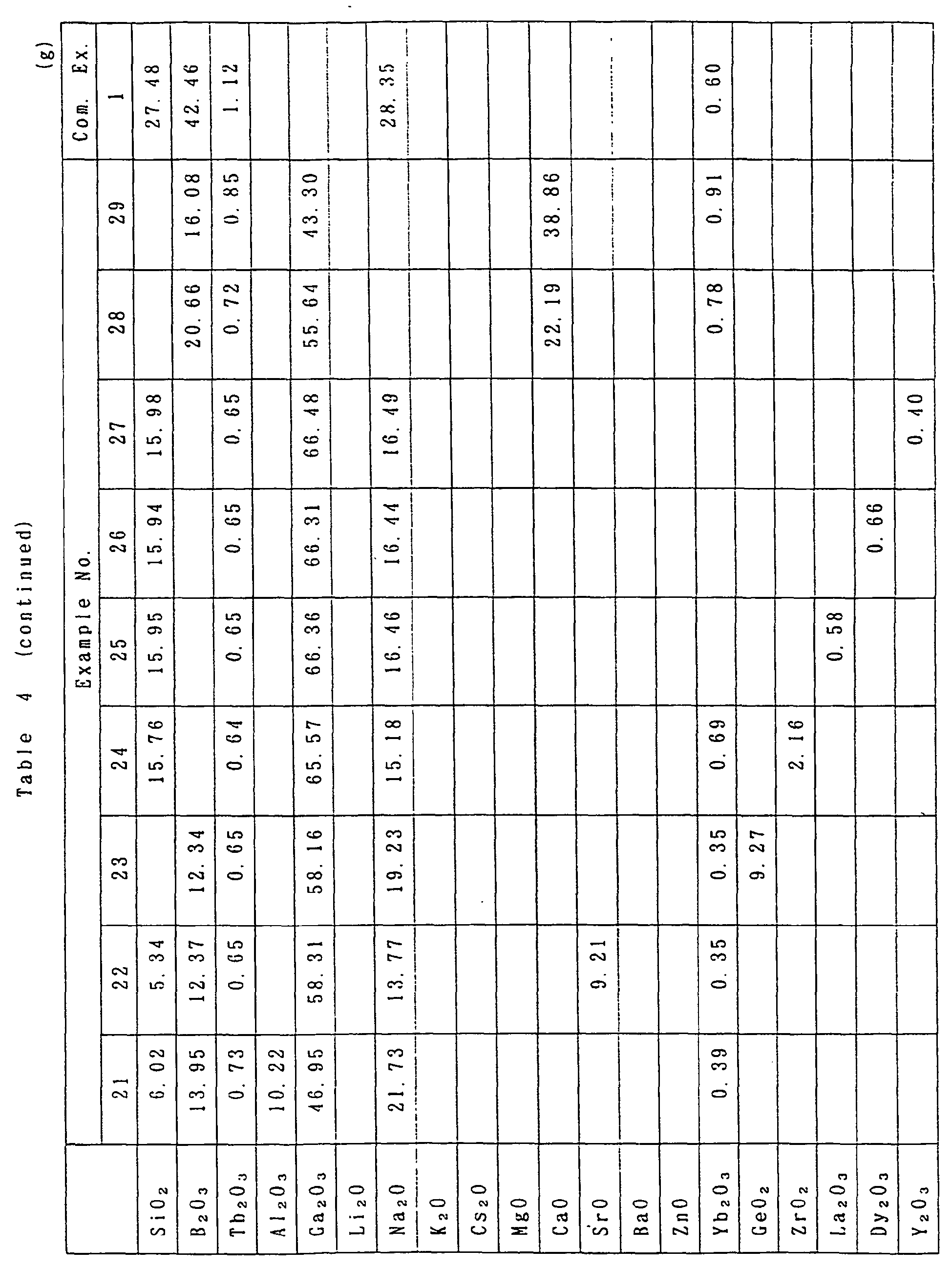

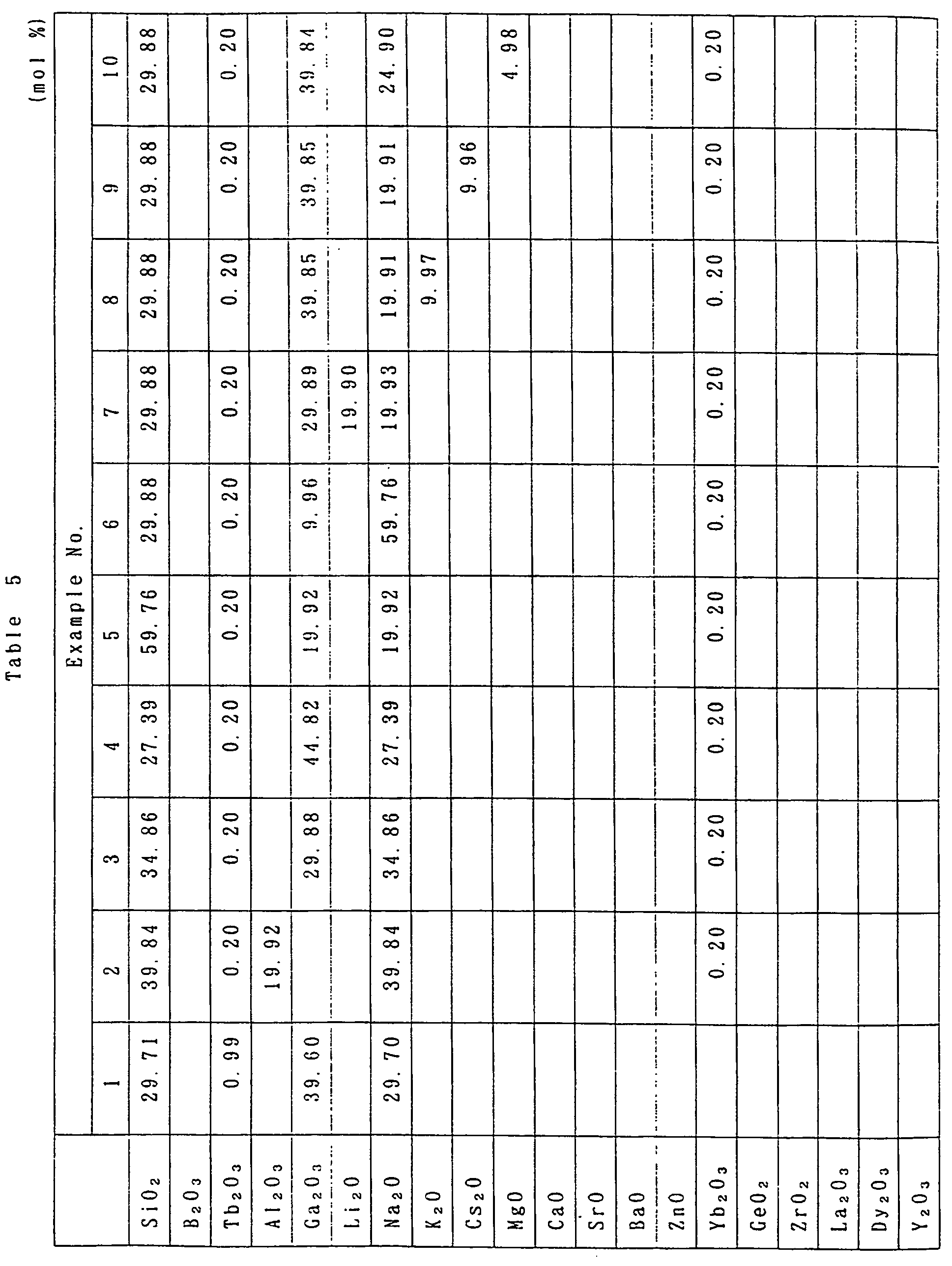

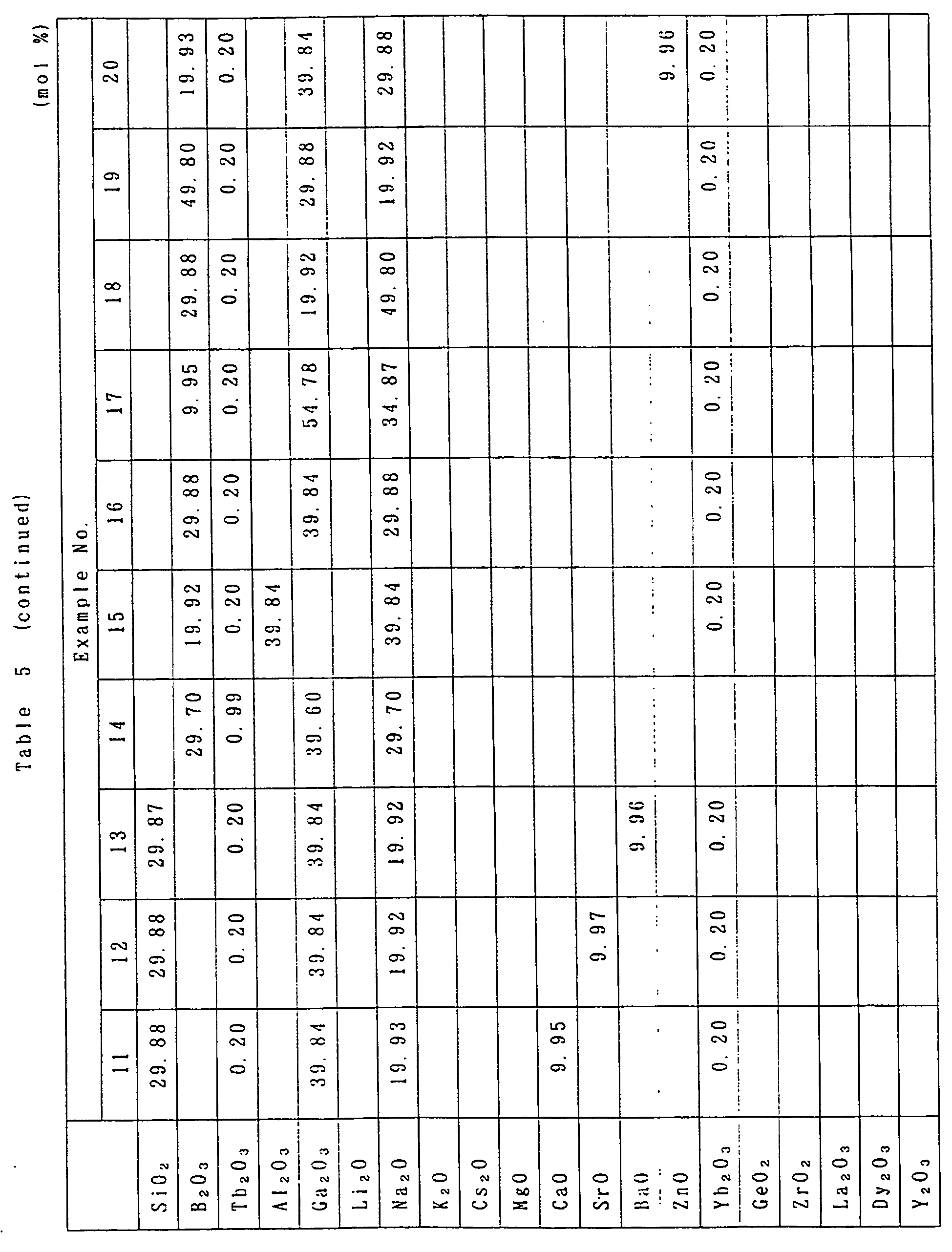

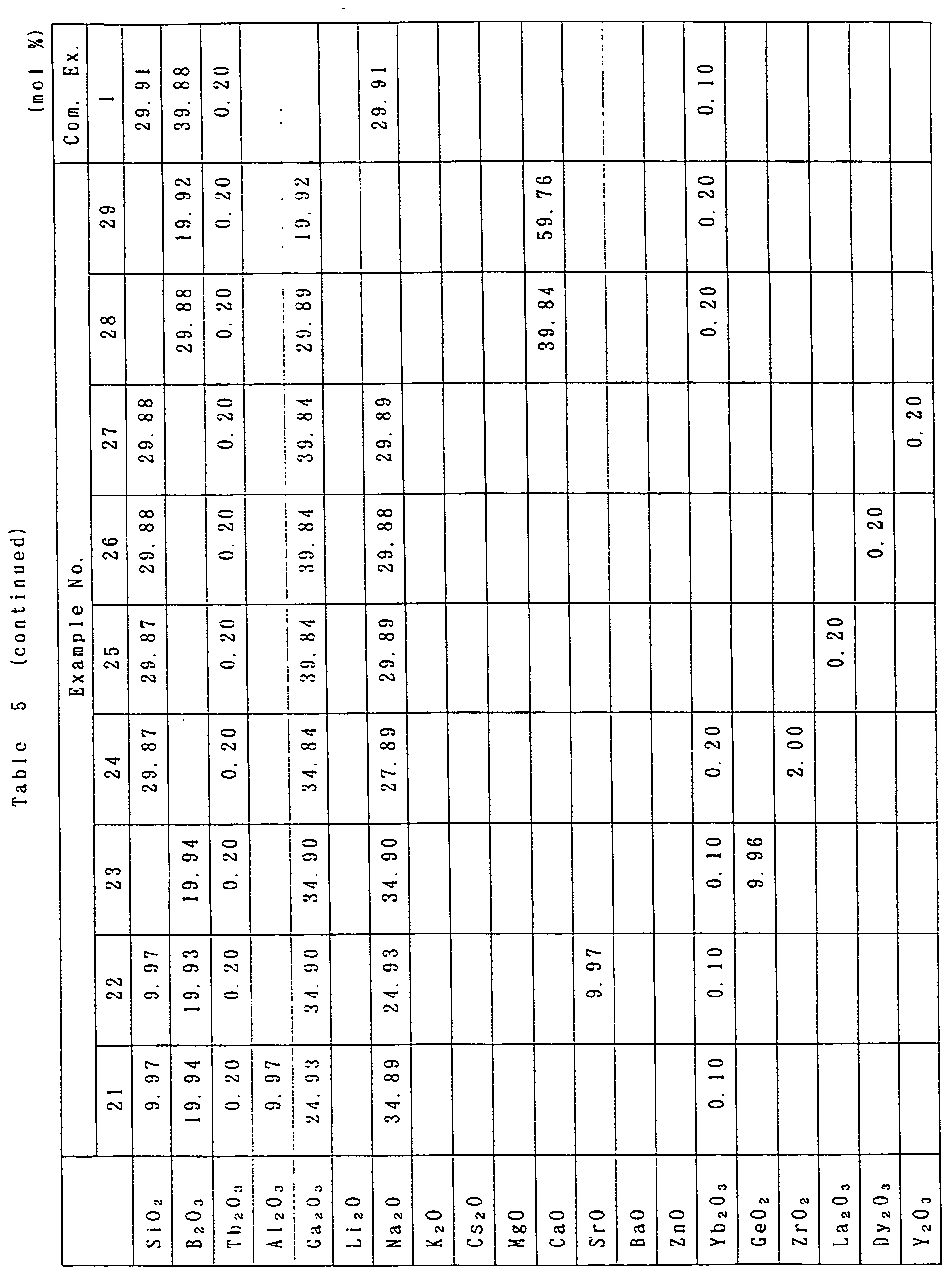

### Example 30 (not in accordance with the present invention)

Raw materials were mixed according to the weight ratios of Example No. 30 shown in Table 6 to give the composition of Example No. 30 shown in Table 7. The thus prepared raw materials were melted at a temperature of 1100 to 1500 °C for to 3 hours, allowed to flow into a metallic mold and shaped to obtain a glass.

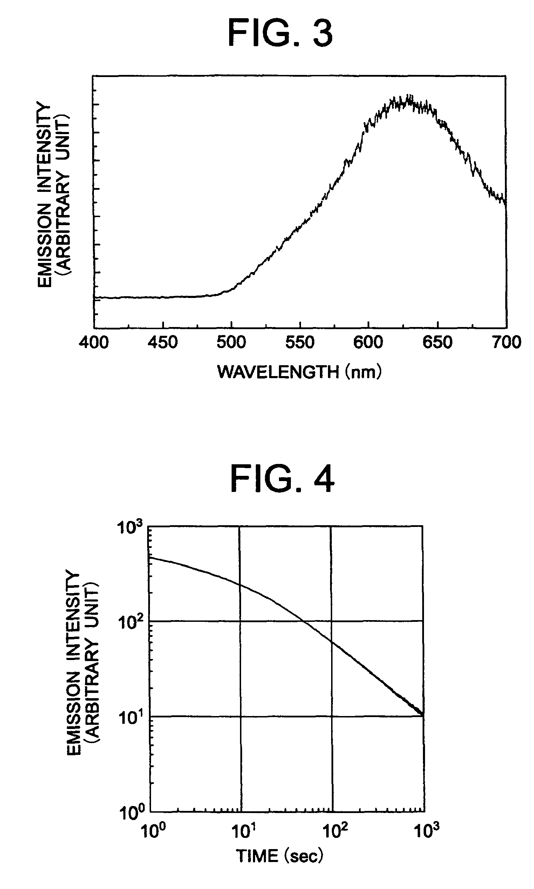

When the resulting glass was excited by an ultraviolet ray of 254 nm, red afterglow phosphorescence was exhibited giving the phosphorescent spectra shown in Fig. 3. The change of emission intensity with time or the glass excited by the UV ray of 254 nm is shown in Fig. 4. When this glass was irradiated by X-rays and then by a semiconductor laser of 800 nm, a red photostimulated luminescence was visually observed.

### Examples 31 to 35 (not in accordance with the present invention)

Raw materials were mixed according to corresponding weight ratios and melted in a similar manner to Example 30 to obtain various glasses.

When the resulting glasses in Examples 31, 34 and 35 were excited by an ultraviolet ray of 254 nm, there were obtained similar phosphorescent spectra to Fig. 3 exhibiting red afterglow phosphorescence similar to Example 30 and change of emission intensity of thereof with time, similar to Fig. 4. When these glasses were irradiated by X-rays in a similar manner to Example 30 and then by a semiconductor laser of 800 nm, a red photostimulated luminescence was visually observed.

When glasses obtained in Examples 32 and 33 by mixing both MnO and Tb₂O₃ were irradiated by an ultraviolet ray of 254 nm, on the other hand, two peaks of Fig. 1 and Fig. 3 were simultaneously observed in phosphorescent spectra exhibiting orange afterglow phosphorescence. After irradiating with an ultraviolet ray of 254 nm, there was obtained a change of emission intensity of each peak with time, similar to Fig. 2 (a) or Fig. 4.

**Table 6**

| (g) | | | | | | |
|---|---|---|---|---|---|---|
| Example No. | 30 | 31 | 32 | 33 | 34 | 35 |
| SiO₂ | 16.12 | 16.23 | 16. 17 | 16.12 | | |
| B₂O₃ | | | | | 20.45 | 22.32 |
| Ga₂O₃ | 67.06 | 67.50 | 67.28 | 67.04 | 55.06 | 40.06 |
| Al₂O₃ | | | | | | 10.90 |
| CaO | | 5.05 | 5.03 | 5.01 | | |
| Na₂O | 16.63 | 11.16 | 11.12 | 11.08 | 24.28 | 26.49 |
| MnO | 0.063 | 0.064 | 0.064 | 0.063 | 0.069 | 0.076 |
| Tb₂O₃ | | | 0.33 | 0.33 | | |
| Yb₂O₃ | | | | 0.35 | | |
| Sb₂O₃ | 0.13 | | | | 0.14 | 0.16 |

**Table 7**

| (mol %) | | | | | | |
|---|---|---|---|---|---|---|
| Example No. | 30 | 31 | 32 | 33 | 34 | 35 |
| SiO₂ | 29.96 | 29.97 | 29.94 | 29.91 | | |
| B₂O₃ | | | | | 29.96 | 29.96 |
| Ga₂O₃ | 39.94 | 39.96 | 39.92 | 39.88 | 29.96 | 19.97 |
| Al₂O₃ | | | | | | 9.98 |
| CaO | | 9.99 | 9.98 | 9.97 | | |
| Na₂O | 29.96 | 19.98 | 19.96 | 19.94 | 39.94 | 39.94 |
| MnO | 0.10 | 0.10 | 0.10 | 0.10 | 0.10 | 0.10 |
| Tb₂O₃ | | | 0.10 | 0.10 | | |
| Yb₂O₃ | | | | 0.10 | | |
| Sb₂O₃ | 0.05 | | | | 0.05 | 0.05 |

### Example 36

Raw materials were mixed according to the weight ratios of Example No. 36 shown in Table 8 to give the composition of Example No. 36 shown in Table 9. The thus prepared raw materials were melted at a temperature of 1100 to 1500 °C for 1 to 3 hours, allowed to flow into a metallic mold and shaped to obtain a glass.

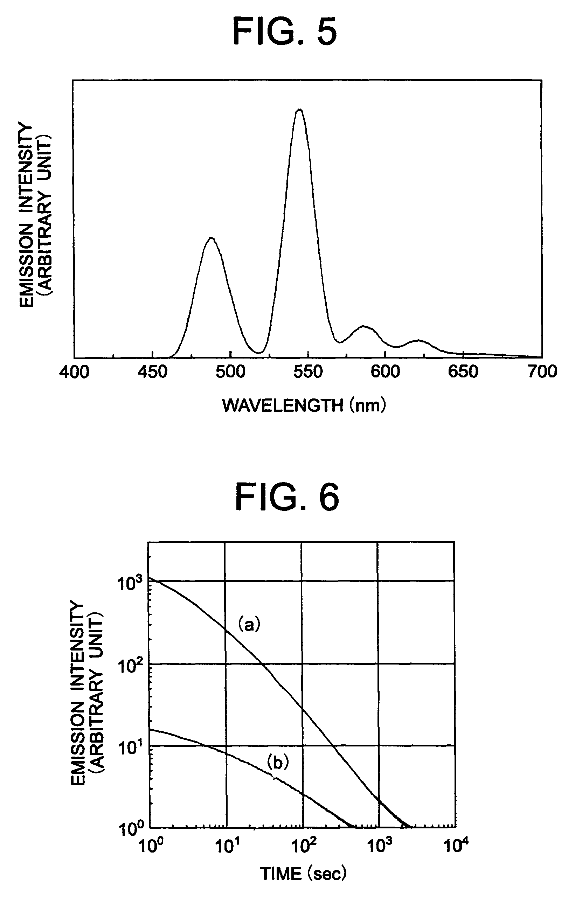

When the resulting glass was excited by an ultraviolet ray of 330 nm, a green afterglow phosphorescence was exhibited giving the phosphorescent spectrum shown in Fig. 5. The change of emission intensity with time of the glass excited by the UV ray of 330 nm is shown in Fig. 6 (a). When this glass was irradiated by X-rays and then by a semiconductor laser of 800 nm or 980 nm, a green photostimulated luminescence was visually observed.

### Examples 37 to 56

Raw materials were mixed according to corresponding weight ratios and melted in the similar manner to Example 36 to obtain various glasses.

When the resulting glasses in Examples 37 to 56 were excited by an ultraviolet ray of 330 nm, there were obtained similar phosphorescent spectra to Fig. 5 exhibiting afterglow phosphorescence similar to Example 36, and change of emission intensity thereof with time, similar to Fig. 6 (a). When these glasses were irradiated by X-rays in a similar manner to Example 1 and then by a semiconductor laser of 800 nm, a green photostimulated luminescence was visually observed.

### Comparative Example 2

A glass having the composition shown in Comparative Example 2 of Table 9 was prepared in a similar manner to Example 36. When the resulting glass was excited by an ultraviolet ray of 330 nm under a similar condition to Example 36, afterglow phosphorescence was hardly measured and the change of emission intensity thereof with time is shown Fig. 6 (b).

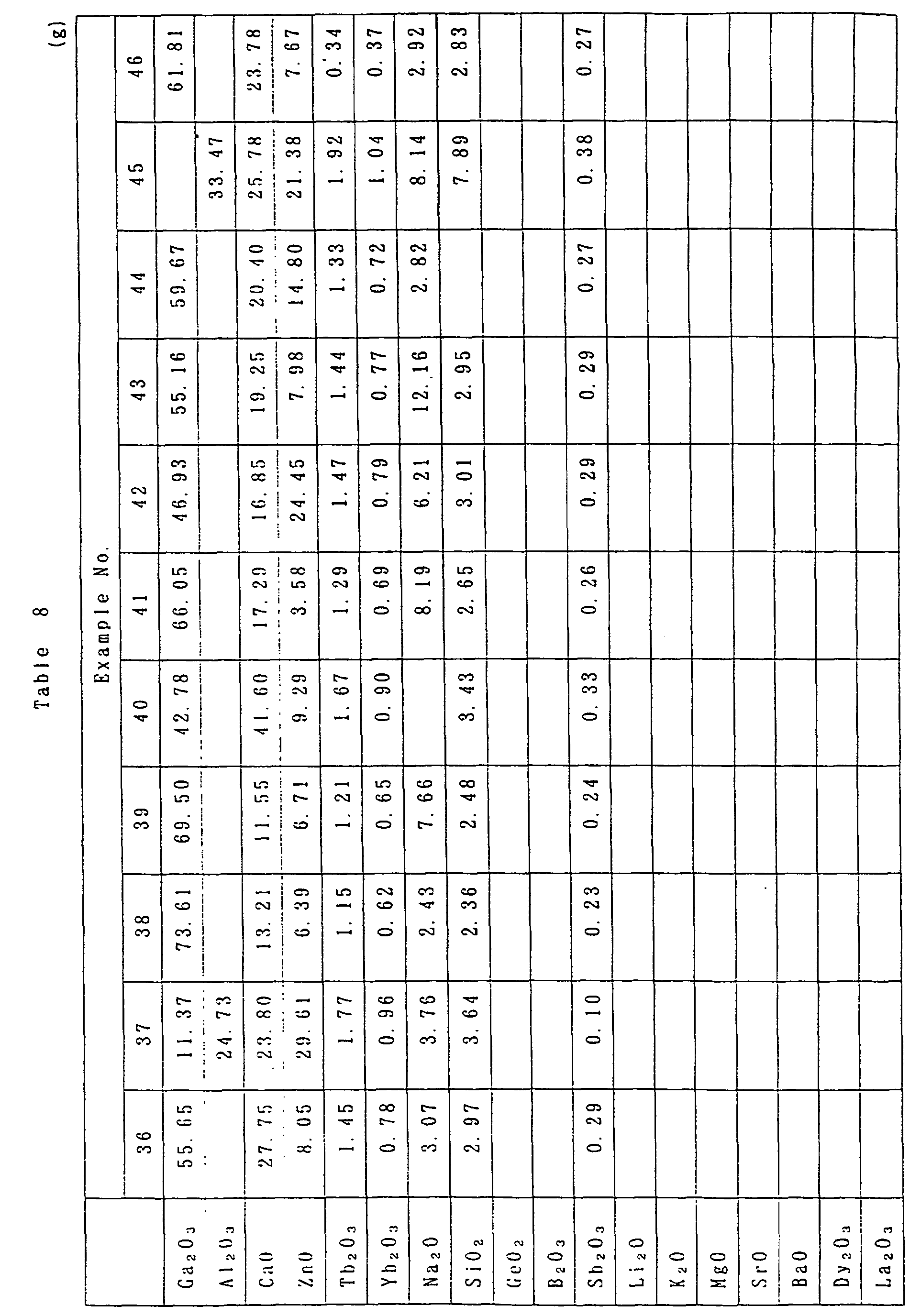

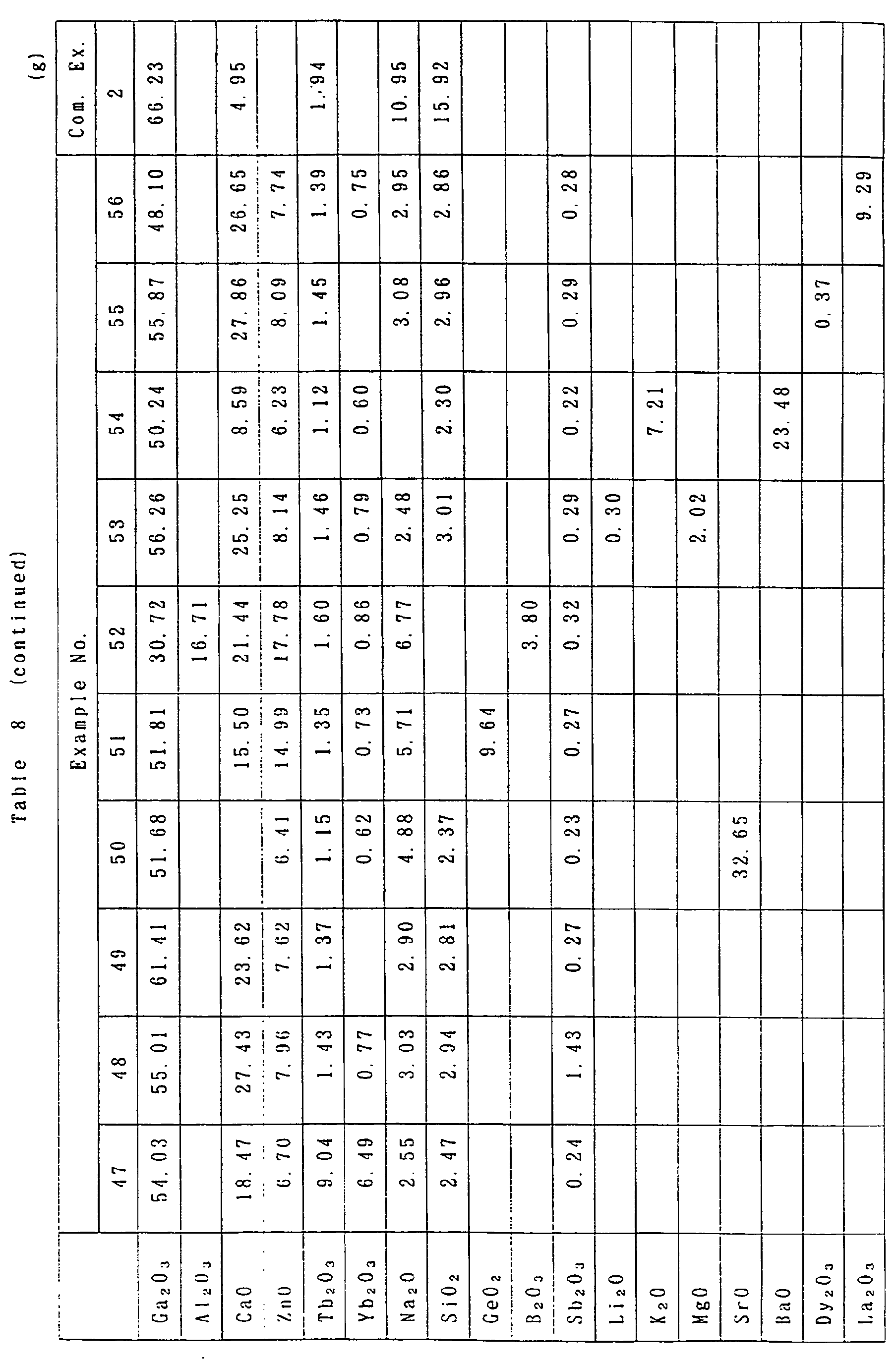

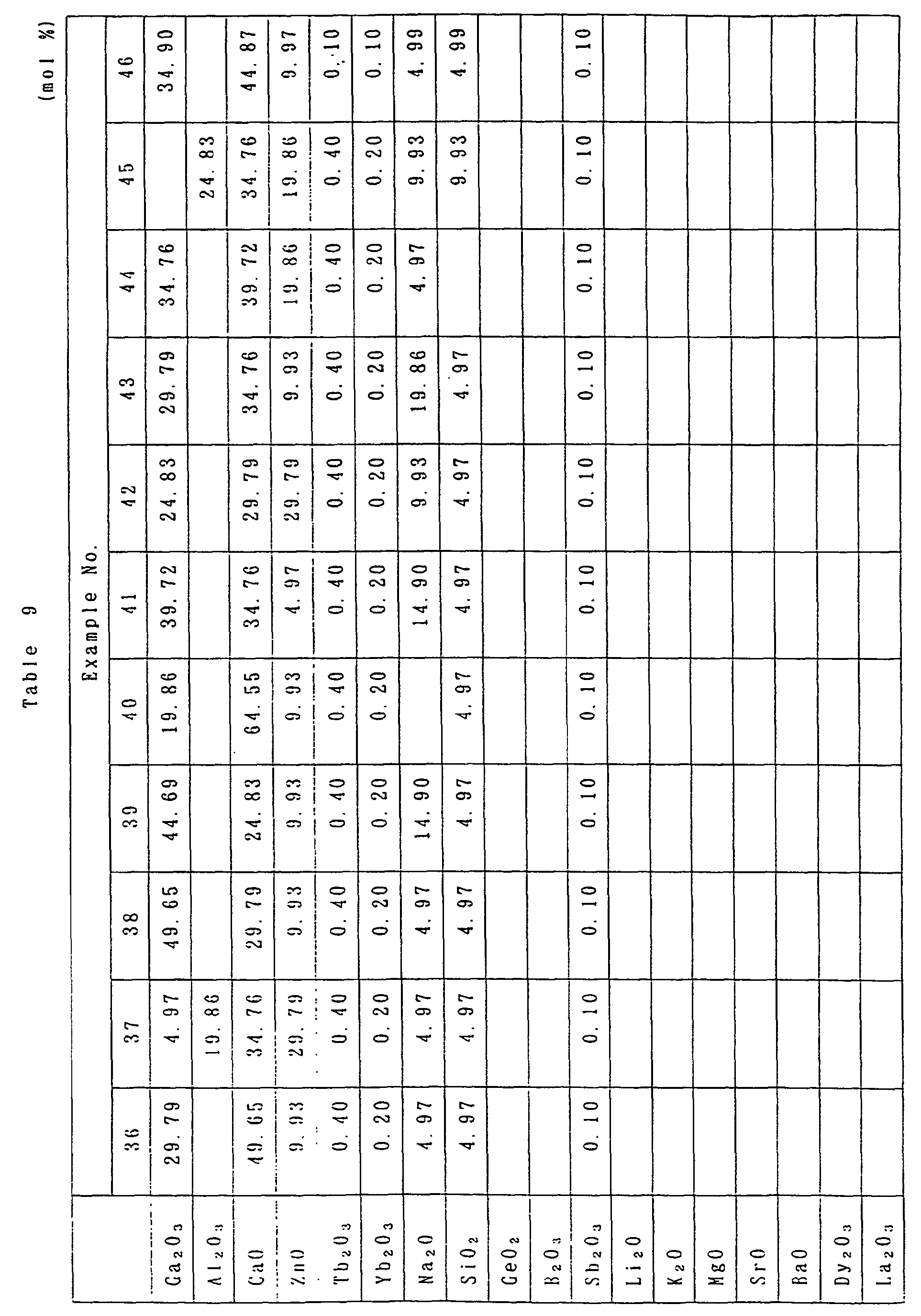

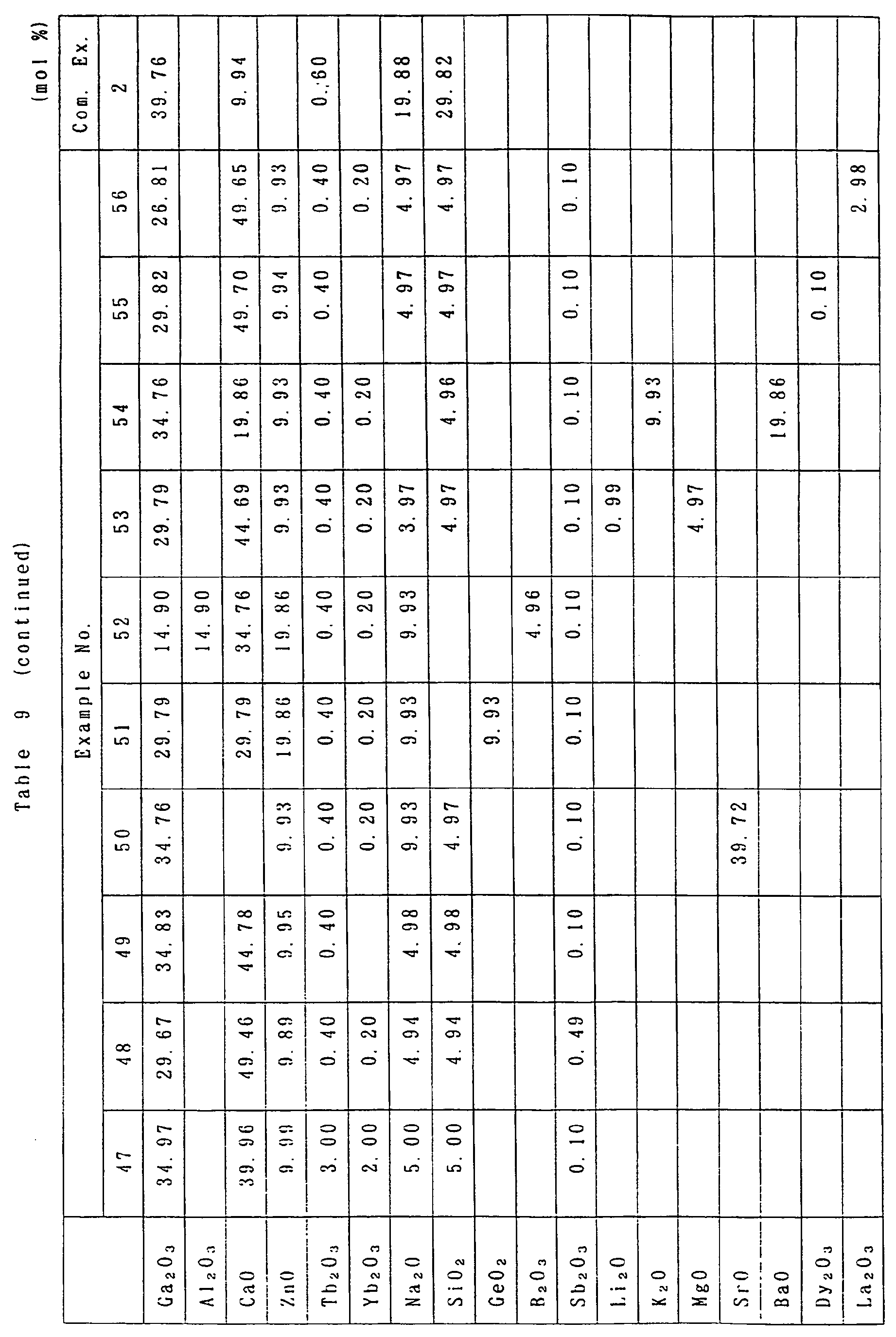

### Utility and Feasibility on a Commercial Scale

According to the present-invention, there can be provided an oxide glass capable of exhibiting a long lasting afterglow and photostimulated luminescence, whereby energy can be accumulated by radiation excitation, for example, by γ-rays, X-rays, UV-rays, etc., light emission can be continued for a long time even after stopping the excitation and photostimulated luminescence can be exhibited by irradiation by visible rays or infrared rays. That is, the long lasting afterglow and photostimulated luminescence oxide glass of the present invention can be used not only as a phosphorescent material for night illumination or night signals, but also as a material for confirming an infrared laser or controlling an optical axis by exhibiting photostimulated luminescence by irradiation by infrared rays. When this glass is converted into fibers, an emitted light in the fiber can efficiently be guided to the end surface of the fiber. In addition, this glass is useful for recording or reproducing of γ-ray, X-ray or UV-ray images without coating the photostimulated luminescent material.

## Claims

1. An oxide glass capable of exhibiting photostimulated luminescence by excitation by radiation, **characterised in that** it is capable of exhibiting a long lasting afterglow and has a constitutional composition comprising, at least, terbium oxide (Tb₂O₃), gallium oxide (Ga₂O₃) or aluminium oxide (Al₂O₃), alkaline earth metal oxide and zinc oxide (ZnO), and which is represented, in terms of atoms making up the glass, by the following chemical composition (mol%):
| | | |
|---|---|---|
| Ga₂O₃ | 0 to 55% | |
| Al₂O₃ | 0 to 30% | (Ga₂O₃ + Al₂O₃ = 15 to 55%) |
| R'O | 20 to 70% | (R': at least one atom selected from Mg, Ca, Sr and Ba) |
| ZnO | 2 to 40% | |
| Tb₂O₃ | 0.01 to 5% | |
| R₂O | 0 to 25% | (R: at least one atom selected form Li, Na, K and Cs) |
| SiO₂ | 0 to 15% | |
| GeO₂ | 0 to 25% | |
| B₂O₃ | 0 to 25% | |
| Yb₂O₃ | 0 to 3% | |
| ZrO₂ | 0 to 5% | |
| Ln₂O₃ | 0 to 5% | (Ln: at least one atom selected from Y, La, Gd, Lu, Sm, Dy, Tm and Pr) and |
| Sb₂O₃ | 0 to 1% | |

2. The oxide glass capable of exhibiting a long lasting afterglow and photostimulated luminescence, as claimed in claim 1, which is represented, in terms of atoms making up the glass, by the following chemical composition (mol%) :
| | | |
|---|---|---|
| Ga₂O₃ | 0 to 50% | |
| Al₂O₃ | 0 to 25% | (Ga₂O₃ + Al₂O₃ = 18 to 50%) |
| R'O | 24 to 65% | (R' : at least one atom selected from Mg, Ca, Sr and Ba) |
| ZnO | 4 to 35% | |
| Tb₂O₃ | 0.1 to 3% | |
| R₂O | 0 to 20% | (R: at least on atom selected from Li, Na, K and Cs) |
| SiO₂ | 0 to 10% | |
| GeO₂ | 0 to 20% | |
| B₂O₃ | 0 to 20% | |
| Yb₂O₃ | 0 to 2% | |
| ZrO₂ | 0 to 3.5% | |
| Ln₂O₃ | 0 to 3% | (Ln: at least one atom selected from Y, La, Gd, Lu, Sm, Dy, Tm and Pr) and |
| Sb₂O₃ | 0 to 0.5% | |

## Patentansprüche

1. Oxidglas, das imstande ist, bei Anregung durch Strahlung eine photostimulierte Lumineszenz zu zeigen, **dadurch gekennzeichnet, dass** es imstande ist, ein lang anhaltendes Nachleuchten zu zeigen, und dass es eine Zusammensetzung hat, die mindestens Terbiumoxid (Tb₂O₃), Galliumoxid (Ga₂O₃) oder Aluminiumoxid (Al₂O₃), Erdalkalimetalloxid und Zinkoxid (ZnO) umfasst, und die, bezogen auf die Atome, die das Glas bilden, der folgenden chemischen Zusammensetzung (Mol-%) entspricht:
| | | |
|---|---|---|
| Ga₂O₃ | 0 bis 55 % | |
| Al₂O₃ | 0 bis 30 % | (Ga₂O₃ + Al₂O₃ = 15 bis 55 %) |
| R'O | 20 bis 70 % | (R': mindestens ein Atom, das unter Mg, Ca, Sr und Ba ausgewählt wird) |
| ZnO | 2 bis 40 % | |
| Tb₂O₃ | 0,01 bis 5 % | |
| R₂O | 0 bis 25 % | (R: mindestens ein Atom, das unter Li, Na, K und Cs ausgewählt wird) |
| SiO₂ | 0 bis 15 % | |
| GeO₂ | 0 bis 25 % | |
| B₂O₃ | 0 bis 25 % | |
| Yb₂O₃ | 0 bis 3 % | |
| ZrO₂ | 0 bis 5 % | |
| Ln₂O₃ | 0 bis 5 % | (Ln: mindestens ein Atom, das unter Y, La, Gd, Lu, Sm, Dy, Tm und Pr ausgewählt wird) |
| und | | |
| Sb₂O₃ | 0 bis 1 %. | |

2. Oxidglas nach Anspruch 1, das imstande ist, ein lang anhaltendes Nachleuchten und photostimulierte Lumineszenz zu zeigen, das, bezogen auf die Atome, die das Glas bilden, der folgenden chemischen Zusammensetzung (Mol-%) entspricht:
| | | |
|---|---|---|
| Ga₂O₃ | 0 bis 50 % | |
| Al₂O₃ | 0 bis 25 % | (Ga₂O₃ + Al₂O₃ = 18 bis 50 %) |
| R'O | 24 bis 65 % | (R': mindestens ein Atom, das unter Mg, Ca, Sr und Ba ausgewählt wird) |
| ZnO | 4 bis 35 % | |
| Tb₂O₃ | 0,1 bis 3 % | |
| R₂O | 0 bis 20 % | (R: mindestens ein Atom, das unter Li, Na, K und Cs ausgewählt wird) |
| SiO₂ | 0 bis 10 % | |
| GeO₂ | 0 bis 20 % | |
| B₂O₃ | 0 bis 20 % | |
| Yb₂O₃ | 0 bis 2 % | |
| ZrO₂ | 0 bis 3,5 % | |
| Ln₂O₃ | 0 bis 3 % | (Ln: mindestens ein Atom, das unter Y, La, Gd, Lu, Sm, Dy, Tm und Pr ausgewählt wird) |
| und | | |
| Sb₂O₃ | 0 bis 0,5 %. | |

## Revendications

1. Verre à base d'oxydes capable de présenter une luminescence photostimulée sous l'effet d'une excitation par irradiation, **caractérisé en ce qu'**il est capable de présenter une rémanence de longue durée et qu'il a une composition constitutive comprenant au moins de l'oxyde de terbium (Tb₂O₃), de l'oxyde de gallium (Ga₂O₃) ou de l'oxyde d'aluminium (Al₂O₃), un oxyde de métal alcalino-terreux et de l'oxyde de zinc (ZnO), et qui est représenté, en termes d'atomes constituant le verre, par la composition chimique suivante (% en moles) :
| | |
|---|---|
| Ga₂O₃ | 0% à 55% |
| Al₂O₃ | 0% à 30% (Ga₂O₃ + Al₂O₃ = 15% à 55%) |
| R'O | 20% à 70% (R' : au moins un atome choisi parmi Mg, Ca, Sr et Ba) |
| ZnO | 2% à 40% |
| Tb₂O₃ | 0,01% à 5% |
| R₂O | 0% à 25% (R : au moins un atome choisi parmi Li, Na, K et Cs) |
| SiO₂ | 0% à 15% |
| GeO₂ | 0% à 25% |
| B₂O₃ | 0% à 25% |
| Yb₂O₃ | 0% à 3% |
| ZrO₂ | 0% à 5% |
| Ln₂O₃ | 0% à 5% (Ln : au moins un atome choisi parmi Y, La, Gd, Lu, Sm, Dy, Tm et Pr) et |
| Sb₂O₃ | 0% à 1% |

2. Verre à base d'oxydes capable de présenter une rémanence de longue durée et une luminescence photostimulée selon la revendication 1, qui est représenté, en termes d'atomes constituant le verre, par la composition chimique suivante (% en moles) :
| | |
|---|---|
| Ga₂O₃ | 0% à 50% |
| Al₂O₃ | 0% à 25% (Ga₂O₃ + Al₂O₃ = 18% à 50%) |
| R'O | 24% à 65% (R': au moins un atome choisi parmi Mg, Ca, Sr et Ba) |
| ZnO | 4% à 35% |
| Tb₂O₃ | 0,1% à 3% |
| R₂O | 0% à 20% (R : au moins un atome choisi parmi Li, Na, K et Cs) |
| SiO₂ | 0% à 10% |
| GeO₂ | 0% à 20% |
| B₂O₃ | 0% à 20% |
| Yb₂O₃ | 0% à 2% |
| ZrO₂ | 0% à 3,5% |
| Ln₂O₃ | 0% à 3% (Ln : au moins un atome choisi parmi Y, La, Gd, Lu, Sm, Dy, Tm et Pr) et |
| Sb₂O₃ | 0% à 0,5% |
